# EUROPEAN PATENT APPLICATION

(11) **EP 2 207 386 A1**
(43) Date of publication of application: **14.07.2010**
(21) Application number: 09100032.3
(22) Date of filing: 12.01.2009
(51) Int. Cl.: H04W 48/12

(54) **Method of transmission of point-to-point priorities**

(71) Applicant: Nokia Siemens Networks OY, 02610 Espoo (FI)
(72) Inventor: Hole Philip, David, Suthampton (GB)
(74) Representative: Bruglachner, Thomas E.

(57) **Abstract**

In order to reduce the amount of over-the-air signalling in cellular networks when informing mobile devices of the relative priorities of different cells to be considered for autonomous cell reselection, a method is defined whereby, rather than explicitly identifying groups of cells (e.g. by their carrier frequencies), a mapping is provided between the broadcast priorities and the point-to-point priorities.

## Description

### Technical field of the invention

The present invention relates to the technical field of communication networks. In particular the present invention relates to a mobile device and a network device for wireless communication, a method of communication between these devices, and to a program element.

### Background of the invention

In 3GPP Release 8, a new algorithm for autonomous cell reselection has been specified, based on priorities (see 3GPP TS 45.008 v. 8.1.0)

Currently, it is foreseen that the priorities will be signalled as broadcast priorities for each carrier frequency (UMTS / E-UTRAN), Bandclass (CDMA2000) or BCCH carrier frequency (GSM), or possibly that these will be grouped together in some logical manner (e.g. simply by radio access technology ("RAT"), so for example, all UMTS cells will have a particular priority value). They apply for all mobile devices within a cell.

It has been defined how to signal broadcast priorities via broadcast signalling in GSM networks.
But there is also a need to provide efficient point-to-point signalling to individual mobiles, so that the behaviour of individual mobiles can be thus controlled (e.g. to ensure that data-centric devices preferentially reselect to cells using high-bandwidth technologies, such as E-UTRAN, while voice-centric devices remain on GSM cells). The priorities in broadcast signalling shall apply if a device has not received point-to-point i.e. dedicated priorities.

### Summary of the invention

It might be an object of the invention to provide improved transmission between a network device and a mobile device. It might be another object of the invention to make the communication between the devices more efficient.

These and other objects will be solved by the subject matter of each independent claim. Further embodiments are described in the respective dependent claims.

In general, a mobile device for wireless communication with a network device, is adapted to receive via broadcast signalling broadcast priority information comprising a list of data and a broadcast priority value for each data, to receive via point-to-point signalling dedicated priority information, wherein the dedicated priority information include a dedicated priority value and a link between the broadcast priority value and a dedicated priority value, and to obtain the data related to the dedicated priority value via the link, from the list of data of the broadcast priority information.

On the other hand, a network device for wireless communication with an individual mobile device, is adapted to transmit via broadcast signalling broadcast priority information comprising a list of data and a broadcast priority value for each data, to map the broadcast priorities to dedicated priorities applicable to the mobile device, to transmit via point-to-point signalling dedicated priority information, wherein the dedicated priority information include a dedicated priority value and a link between the dedicated priority value and a broadcast priority value.

In this context, a 'mobile device' may be a mobile phone, a computer with an arrangement for wireless communication, or another device which is capable to receive and/or transmit information wirelessly.

A 'network device' may be a base station, a board or a chip, or another device which is capable of exchanging information with a mobile device, wirelessly.

According to the invention, it has to be understood that the broadcast priority information consists, in general, of a table allocating a broadcast priority value to a data of several different data, wherein these data may be, for example, a carrier frequency (UMTS / E-UTRAN), a Bandclass (CDMA2000) or a BCCH carrier frequency (GSM), or possibly another radio access technology being grouped together in some logical manner.

Furthermore, radio access technology and/or frequency is intended to refer to either a single radio access technology (RAT), and hence, in the case of priorities, to all cells using that radio access technology, or to a particular frequency layer of a RAT, and hence, in the case of priorities, to all cells using operating on that frequency layer of that radio access technology. However, this invention is applicable to any cell or grouping of cells within a cellular system; for example, in a CDMA2000 network, these may be characterized by their Band Class; in a GSM network, these may be characterized by the centre frequency of the BCCH carrier or by the network colour code.

Further, 'broadcast' means that this information will be sent to all mobile devices within reach.

In contrast to this, the dedicated priority information consists, in general, of a list of dedicated priority values each of which is linked with one of the broadcast priority values, wherein 'linked' means that the resulting table maps the broadcast priority values and the dedicated priority values, or allocates the first one to the other one.

It should be noted that it is also possible that more than one broadcast priority value is linked with only one dedicated priority value.

According to an embodiment of the invention, the dedicated priority information transmitted by the network device and received by the mobile device, may further comprise a bit indicating provision of a dedicated priority value.

For the case that no dedicated priority is applicable, said bit indicates as to whether this fact is intended or not, which results in different rules of cell reselection.

According to an embodiment of the invention, the dedicated priority information may further comprise at least one bit identifying a validity of the dedicated priority information, wherein the validity may relate to packet transfer mode or idle mode of the mobile device.

It should be noted that either the bit indicating provision or the at least one bit indentifying the validity, or both of the bits may be transmitted together with the list of dedicated priority values and the links, in the dedicated priority information.

According to another aspect of the invention, a method for wireless communication between a mobile device and a network device is provided, wherein the method comprises the steps of transmitting from the network device to the mobile device broadcast priority information comprising a list of data and a broadcast priority value for each data, mapping the broadcast priorities to dedicated priorities applicable to the mobile device, transmitting dedicated priority information from the network device to the mobile device, wherein the dedicated priority information include a dedicated priority value and a link between the dedicated priority value and a broadcast priority value, and utilizing by the mobile device in operation, the data from the list of data of the broadcast priority information, related to the dedicated priority value via the link.

This method may be performed while the mobile device stays in one network cell or moves from one cell to another as a result of handover or cell reselection.

According to a further aspect of the invention, a program element is provided, which when being executed by a processor located in a mobile device, is adapted to carry out obtaining data received together with a broadcast priority value for each data via broadcast signalling, related to a dedicated priority value which is linked with a broadcast priority value, wherein the dedicated priority value and the link is received via point-to-point signalling.

Furthermore, another program element is provided, which when being executed by a processor located in a network device, is adapted to carry out mapping broadcast priorities to dedicated priorities applicable to an individual mobile device.

Therefore, the invention relates to a program element for a processing device, such that the method according to the invention might be executed on an appropriate system. The program element is preferably loaded into a working memory of a data processor. The data processor is thus equipped to carry out the method of the invention. Further, the program code of the program element may be stored on a computer readable medium, such as a CD-Rom. However, the program element may also be presented over a network like the worldwide web and can be downloaded into the working memory of a data processor from such a network.

It has also to be noted that exemplary embodiments of the present invention and aspects of the invention have been described with reference to different subject-matters. In particular, some embodiments have been described with reference to apparatus type claims whereas other embodiments have been described with reference to method type claims. However, a person skilled in the art will gather from the above and the following description that unless other notified in addition to any combination between features belonging to one type of subject-matter also any combination between features relating to different subject-matters in particular between features of the apparatus claims and the features of the method claims may be considered to be disclosed with this application.

These and other aspects of the present invention will become apparent from and elucidated with reference to the embodiments described hereinafter.

Exemplary embodiments of the present invention will be described in the following with reference to the following drawings.

### Brief description of the drawings

Fig. 1 shows an example of information transmitted from a network device via broadcast signalling and dedicated signalling to a mobile device located in one cell of a cellular network.
Fig. 2 shows an example of information transmitted from a network device via dedicated signalling in one cell and broadcast signalling in a second cell to a mobile device.

### Detailed description

The illustration in the drawings is schematic.

The dedicated priority information may be sent as an element of the existing Channel Release Message. Taking into account the existing mandatory elements of the Channel Release message, only approximately 20 octets remain available to signal additional optional information. If more than this amount of information is required, then an extra GSM radio block needs to be transmitted.

Because the Channel Release message is used at the end of every dedicated mode connection (e.g. voice call, or connection established for signalling purposes e.g. to perform mobility management procedures such as Location Area Updating procedures), it is therefore preferable that no additional radio blocks should be required (meaning that the additional information required for dedicated priority signalling should fit within the existing available space). For some mobility management procedures, relatively few radio blocks need to be transferred and therefore the addition of further radio blocks would add a proportionately large load to the network.

It is therefore necessary to specify an efficient method of signalling these dedicated priorities.

In the following, an exemplary method of efficiently transmitting the dedicated priorities that should be used by a mobile station, is described. Rather than explicitly identify RATs/frequencies in the point-to-point signalling, links (specific to that device) are provided between the broadcast priorities and the dedicated priorities.

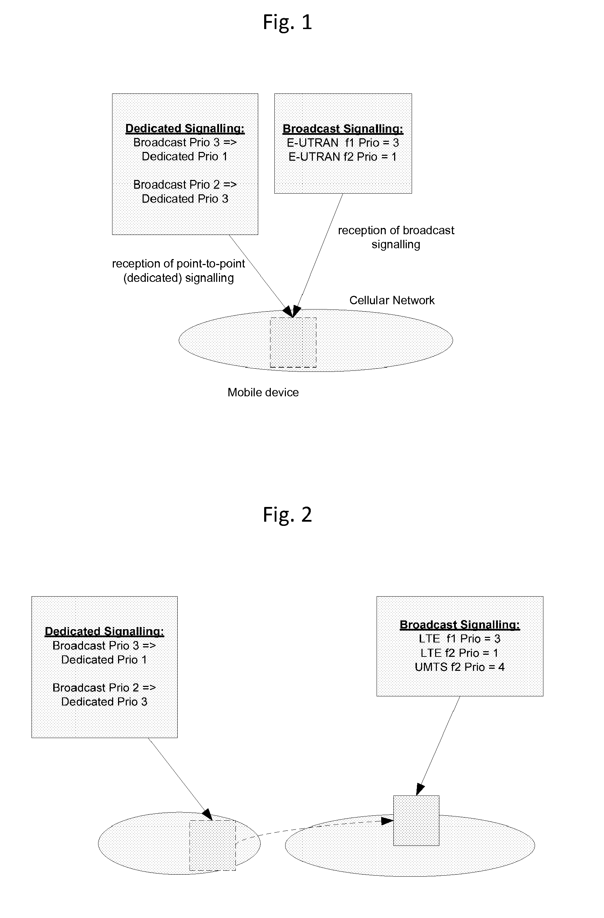

The principle is illustrated in the figure 1.

In this example, the mobile device receives information both via broadcast signalling and via point-to-point (dedicated) signalling (note that only an exemplary subset of the transmitted information is shown in the figure). The mobile device can determine, for example that the dedicated priority that it should use with respect to E-UTRAN frequency "f1", is 1, as follows:
i) the broadcast priority for E-UTRAN f1 is 3
ii) the link indicates that broadcast priority 3 maps to a dedicated priority of 1
iii) therefore the dedicated priority for E-UTRAN frequency f1 is 1.

This method would not preclude explicit indication of the priority of one or more frequency layers (such explicit indication having precedence over any priority obtained by means of mapping rules). For example, in case it is required to indicate different dedicated priority values for frequencies which have the same broadcast priority values, then explicit signalling (identifying the frequency/frequencies) could be used instead for those frequencies.

Accordingly, a network device transmitting the dedicated information does so by means of the following steps:
i) transmitting a broadcast priority for at least one carrier frequency, bandclass or RAT in the broadcast information of a mobile radio cell,
ii) mapping the broadcast priorities of the at least one frequencies to dedicated priorities applicable to an individual mobile device, and
iii) signalling to a mobile device in point-to-point (dedicated) signalling dedicated priority information comprising dedicated priorities for the at least one frequency and/or RAT and/or bandclass and related to the broadcast priorities.

Then, a mobile device would determine the dedicated priority for a given RAT / frequency by
i) receiving a list of RATs and/or frequencies in broadcast information indicating the broadcast priorities applicable to at least one RAT and/or frequency,
ii) receiving dedicated priority information comprising dedicated priorities via point-to-point (non-broadcast) signaling, and
iii) obtaining the dedicated priority value from the dedicated priority information for at least one RAT and/or frequency via its relation to the broadcast priority.

In general, coding of the dedicated priorities could be by a list of one or more mapping table entries, each one comprising the broadcast priority and the corresponding dedicated priority, wherein both Broadcast_Priority and Dedicated_Priority are binary-encoded.

An example of such a table may be

| Broadcast priority | Dedicated priority |
|---|---|
| 1 | 5 |
| 4 | 2 |
| 3 | 2 |
| ... | ... |

However, since only eight priority levels are to be used, a more efficient coding could be by means of signalling just the dedicated priorities which then correspond to the broadcast priorities in their order, i.e. the first row corresponds to broadcast priority value 1 and the last row to broadcast priority value 8.

An example for such a table may be

| Dedicated priority |
|---|
| 3 |
| 2 |
| 3 |

| no dedicated priority applicable |
|---|
| 5 |
| 7 |
| 2 |
| 4 |

As depict in this example, there may be a row indicating that no dedicated priority is applicable. This may be coded by a numeral usually not used.

The approach according to the second example is shorter than the approach according to the first example as long as several dedicated priority values are signalled.

The mapping sent in the point-to-point signalling is stored by the mobile device and is used to determine dedicated priorities in cells which it subsequently moves to, in exactly the same method as described above (i.e. by combining the mapping with the information broadcast in the new cell).

An advantage of that is a very efficient signalling.

Additionally, if new RATs are added, no changes are required to the point-to-point signalling, only to the broadcast signalling. Dedicated priorities will function correctly in a cell with neighbour cells using a new RAT, even the network controller in the cell where the dedicated priorities were sent had no knowledge of the new RAT.

However, there is already a defined rule:
In order to a) not require that dedicated priorities be provided for all RATs, but also b) allow (by use of dedicated priorities) a mobile to be prevented from considering a particular frequency for reselection, the following behaviour has been specified already:
   - if, for a given RAT, no dedicated priority information is provided (for any frequency), then the legacy reselection procedure shall be used for all frequencies for that RAT
   - if, for a given RAT, dedicated priority information is provided for one or more frequencies, then cells on frequencies for which no dedicated priority information is provided are not to be considered as reselection candidates.
      Because of this rule it is necessary to explicitly indicate whether or not the mapping table provided is applicable to each possible RAT.

This is required in the following scenario: a mobile device notes that broadcast priorities are provided in the current cell for one or more frequencies for a given RAT, but has no link corresponding to the indicated broadcast priority/priorities. The mobile cannot determine whether this is because
a) the network has not assigned it any dedicated priorities for that RAT (in which case the mobile should use the legacy reselection algorithms towards that RAT), or
b) the network has assigned to it dedicated priorities for one or more other frequencies for that RAT (which appear in broadcast information in some other cell) and therefore that the mobile should not consider those frequencies listed in the current cell's broadcast information as reselection candidates.

This is illustrated in the figure 2.

The intention here of the operator may be for example that the mapping is applied to UMTS cells, except that cells on UMTS using frequency f2 not be considered for reselection. On entering a cell where the broadcast information lists UMTS cells only on f2 (and with a broadcast priority that was not listed in the original mapping sent to the mobile), it needs to be clear to the mobile that dedicated priorities do apply (in general) to UMTS cells, and that the lack of dedicated priority for frequency f2 indicates that this frequency shall not be considered for reselection, and not that the legacy reselection rules shall be applied.

Therefore, the dedicated priority information may be enhanced by means of additional signalling, comprising one bit for each RAT sent together with the dedicated priorities.

For example bit 0 corresponds to E-UTRAN; bit 1 corresponds to UMTS; bit 2 corresponds to CDMA2000.

| E-UTRAN | UMTS | CDMA2000 |
|---|---|---|
| 0 | 1 | 1 |

For each bit:
'0' dedicated priorities are not provided for this RAT; legacy reselection rules apply to all frequencies
'1' dedicated priorities are provided for this RAT; the absence of a corresponding mapping for a particular frequency indicates that the frequency is not to be considered for reselection.

The indication of '0' will also ensure that even if a mapping does arise due to a mis-configuration the mobile will ignore it.

In the above example, the signalling of '1' would ensure that the operator's intention is clearly signalled to the mobile device.

A benefit of this may be resolved ambiguity.

According to another aspect of the invention, autonomous cell reselection is applicable both in idle mode and in packet transfer mode. It has previously been agreed that dedicated priorities will apply both in idle mode and in packet transfer mode.

In packet transfer mode, the Channel Release is not used, so dedicated priorities will be sent using a different message, e.g. the Packet Measurement Order.

However, an operator may require that the dedicated priorities sent to a mobile in packet transfer mode be applicable only in packet transfer mode, for example if the mobility preferences for a device should be different when in packet transfer mode e.g. a voice-centric device which may normally be preferentially camping in GSM should nonetheless move to a higher-bandwidth RAT when it starts using packet switched services.

Therefore, bits are added to the dedicated priority information to indicate the validity of the given priority, as either:
- valid only in packet transfer mode
- valid only in idle mode
- valid in both packet transfer mode and in idle mode for as long as mobile is in GMM_READY state
- valid in both packet transfer mode and in idle mode, regardless of mobility state

It is noted that all of these options may be signalled in all messages; eventually some of the above options may be grouped together and/or dropped.

Furthermore, in case the dedicated priorities are sent to a mobile in packet transfer mode but are not applicable in idle mode, then signalling indicates whether the mobile should use broadcast priorities or the most recently received dedicated priorities that are valid in idle mode.

An example for coding the validity of dedicated priorities may be as follows

| Coding | Meaning |
|---|---|
| 00 | valid only in packet transfer mode |
| 01 | valid only in idle mode |
| 10 | valid in both packet transfer mode and in idle mode for as long as mobile is in GMM READY state |
| 11 | valid in both packet transfer mode and in idle mode, regardless of mobility state |

Or for Next_idle_mode_priorities

| **Coding** | **Meaning** |
|---|---|
| 0 | broadcast priorities (or use legacy reselection if no broadcast priorities) |
| 1 | the most recently received dedicated priorities that are valid in idle mode (or broadcast priorities, if no valid dedicated priorities stored; else, if no broadcast priorities, then use legacy reselection |

The mobile station is required to store dedicated priorities if they are valid in idle mode, and it receives dedicated priorities which are not valid in idle mode.

Advantageously, it may allow for dedicated priorities to be signalled which are valid only for use in packet transfer mode or only for use in idle mode.

While the invention has been illustrated and described in detail in the drawings and foregoing description, such illustration and description are to be considered illustrative or exemplary and. not restrictive; the invention is not limited to the disclosed embodiments.
Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. A single processor or other unit may fulfill the functions of several items recited in the claims. The mere fact that certain measures are recited in mutually different dependent claims does not indicate that a combination of these measured cannot be used to advantage.

It should also be noted that reference signs in the claims shall not be construed as limiting the scope of the claims.

## Claims

1. A mobile device for wireless communication with a network device, the mobile device is adapted
to receive via broadcast signalling broadcast priority information comprising a list of data and a broadcast priority value for each data,
to receive via point-to-point signalling dedicated priority information, wherein the dedicated priority information include a dedicated priority value and a link between the broadcast priority value and a dedicated priority value, and
to obtain the data related to the dedicated priority value via the link, from the list of data of the broadcast priority information.

2. The mobile device of claim 1, wherein the dedicated priority information further comprises a bit indicating provision of a dedicated priority value.

3. The mobile device of claim 1 or 2, wherein the dedicated priority information further comprises at least one bit identifying a validity of the dedicated priority information.

4. The mobile device of claim 3, wherein the validity relates to packet transfer mode or idle mode of the mobile device.

5. The mobile device of any of claims 1 to 4, wherein the data is selected from the group consisting of radio access technology, carrier frequency and band class.

6. A network device for wireless communication with an individual mobile device, the network device is adapted
to transmit via broadcast signalling broadcast priority information comprising a list of data and a broadcast priority value for each data,
to map the broadcast priorities to dedicated priorities applicable to the mobile device, and
to transmit via point-to-point signalling dedicated priority information, wherein the dedicated priority information include a dedicated priority value and a link between the dedicated priority value and a broadcast priority value.

7. The network device of claim 6, wherein the dedicated priority information further comprises a bit indicating provision of a dedicated priority value.

8. The network device of claim 6 or 7, wherein the dedicated priority information further comprises at least one bit identifying a validity of the dedicated priority information.

9. The network device of claim 8, wherein the validity relates to packet transfer mode or idle mode of the mobile device.

10. The network device of any of claims 6 to 9, wherein the data is selected from the group consisting of radio access technology, carrier frequency and band class.

11. A method for wireless communication between a mobile device according to any one of claims 1 to 5, and a network device according to any one of claims 6 to 10, the method comprising the steps of:
transmitting from the network device to the mobile device broadcast priority information comprising a list of data and a broadcast priority value for each data,
mapping the broadcast priorities to dedicated priorities applicable to the mobile device,
transmitting dedicated priority information from the network device to the mobile device, wherein the dedicated priority information include a dedicated priority value and a link between the dedicated priority value and a broadcast priority value, and
utilizing by the mobile device in operation, the data from the list of data of the broadcast priority information, related to the dedicated priority value via the link.

12. A program element, which when being executed by a processor located in a mobile device, is adapted to carry out obtaining data received together with a broadcast priority value for each data via broadcast signalling, related to a dedicated priority value which is linked with a broadcast priority value, wherein the dedicated priority value and the link is received via point-to-point signalling.

13. A program element, which when being executed by a processor located in a network device, is adapted to carry out mapping broadcast priorities to dedicated priorities applicable to an individual mobile device.
